# EUROPÄISCHE PATENTSCHRIFT

(11) **EP 3 336 048 B1**
(45) Veröffentlichungstag und Bekanntmachung des Hinweises auf die Patenterteilung: **28.12.2022**
(21) Anmeldenummer: 17200741.1
(22) Anmeldetag: 09.11.2017
(51) Int. Cl.: B66F 9/07

(54) **REGALBEDIENGERÄT**
SHELF SERVING DEVICE
APPAREIL DE COMMANDE DE RAYONNAGE

(30) Priorität: 15.12.2016 DE 102016124450
(43) Veröffentlichungstag der Anmeldung: 20.06.2018
(73) Patentinhaber: Jungheinrich Aktiengesellschaft, 22047 Hamburg (DE)
(72) Erfinder: Cavelius, Jörg, 61118 Bad Vilbel (DE); Harting, Elmar, 63075 Offenbach/Main (DE)
(74) Vertreter: Keil & Schaafhausen Patentanwälte PartGmbB

(56) Entgegenhaltungen:
- EP-A2- 1 897 837
- EP-A2- 2 161 236
- DE-A1-102004 008 585
- FR-A1- 2 549 814
- JP-A- 2000 044 012

## Beschreibung

Die Erfindung betrifft ein Regalbediengerät mit den Merkmalen des Oberbegriffs des Anspruchs 1.

Ein derartiges Regalbediengerät ist aus FR 2 549 814 A1 bekannt. Die Schienenanordnung weist Seitenwände auf, die von der Laufbahn ausgehen und die an ihrem von der Laufbahn abgewandten Ende nach innen umgeformt sind, um Flansche zu bilden, und von Unterfangrädern untergriffen werden.

EP 2 161 236 A2 zeigt ein weiteres Regalbediengerät mit einem Fahrwerk, bei dem die Schienenanordnung durch ein Doppel-T-förmiges Profil gebildet ist. Das Profil weist an seinem unteren Ende einen Boden auf, der eine Laufbahn bildet. Das Profil weist am oberen Ende Stützflansche auf, die mit dem Boden über eine vertikale Wand verbunden sind. An den Schmalseiten der Flansche liegen Führungsrollen an.

DE 10 2004 008585 A1 zeigt ein Regalbediengerät für ein Regallager, das eine Schienenanordnung mit einer Laufbahn aufweist. Von der Laufbahn stehen seitlich Seitenwände nach oben vor, die über die Laufbahn nach innen gebogen sind. Außerhalb der Seitenwände sind Stützflansche angeordnet.

Ein Regalbediengerät wird üblicherweise verwendet, um Produkteinheiten in ein Regal einzulagern oder aus einem Regal zu entnehmen. In vielen Fällen ist dafür eine Bewegungsmöglichkeit des Regalbediengeräts in drei Raumkoordinaten erforderlich. Die Bewegung in einer dieser Raumkoordinaten erfolgt entlang der Schienenanordnung, indem das Fahrwerk mit seiner Laufrollenanordnung auf der Laufbahn der Schienenanordnung entlang läuft. Die Schienenanordnung ist dabei zweckmäßigerweise in einer Regalgasse eines Regals verlegt. An dem Fahrwerk ist vielfach ein Mast angeordnet, an dem ein Hubwagen auf und ab bewegt werden kann. Dies ist dann eine Bewegung in einer zweiten Raumkoordinate. An dem Hubwagen ist dann vielfach ein Lastaufnahmemittel angeordnet, das eine Bewegung in die dritte Raumkoordinate ermöglicht.

Üblicherweise werden bei Regalbediengeräten Stahlträger als Schienenanordnungen verwendet. Diese Stahlträger haben ein I- oder Doppel-T-Profil mit zwei parallelen Flanschen, die durch einen Verbindungssteg miteinander verbunden sind. Der Verbindungssteg steht bei bestimmungsgemäßer Montage senkrecht. Ein Flansch liegt auf dem Boden auf und der andere Flansch dient mit seiner Oberseite als Laufbahn und mit seiner Unterseite als Stützbahn für die Unterfangräder.

Der Erfindung liegt die Aufgabe zu Grunde, einen vorhandenen Bauraum möglichst gut für Lagerflächen in einem Regal ausnutzen zu können.

Diese Aufgabe wird bei einem Regalbediengerät der eingangs genannten Art mit den Merkmalen des kennzeichnenden Teils des Anspruchs 1 gelöst.

Mit einer derartigen Ausgestaltung ist es möglich, die Laufbahn tiefer als bisher anzuordnen, ohne die Funktion der Unterfangräder aufgeben zu müssen. Je niedriger die Laufbahn angeordnet ist, desto weiter kann das Regalbediengerät in Schwerkraftrichtung nach unten, also in eine Richtung auf den Fußboden zu, bewegt werden und auch dort Ablageflächen im Regal erreichen.

Die Laufbahn ist am Boden einer U-förmigen Ausnehmung der Schienenanordnung angeordnet. Das Fahrwerk kann damit jedenfalls zum Teil in die Schienenanordnung eingelassen werden. Der Schwerpunkt des Fahrwerks kann damit relativ tief angeordnet werden.

Der Boden bildet die Oberseite einer Grundplatte, die auf einer Unterlage der Schienenanordnung aufliegt. Damit befindet sich im Grunde nur noch die Grundplatte zwischen der Unterlage der Schienenanordnung und der Laufrollenanordnung. Die Laufrollenanordnung ist also lediglich um die Dicke der Grundplatte von der Unterlagen entfernt, so dass das Regalbediengerät auch relativ tiefliegende Bereich des Regals erreichen kann. Im Vergleich zu herkömmlichen Schienenanordnungen, wie sie oben geschildert worden ist, kann die Laufbahn um 100 mm bis 200 mm niedriger angeordnet werden.

Die Schienenanordnung weist seitliche Stützflansche auf, deren Unterseite mit der Unterseite der Grundplatte fluchtet. Die Schienenanordnung wird also gegen ein Kippmoment abgestützt.

Das Fahrwerk weist Führungsrollen auf, die an den Seitenwänden der U-förmigen Ausnehmung anliegen. Damit wird das Fahrwerk seitlich geführt, so dass die Laufrollenanordnung immer zuverlässig auf der Laufbahn gehalten wird. Die Führungsrollen liegen ebenfalls in der Schienenanordnung, so dass hier nur eine geringe Breite erforderlich ist.

Vorzugsweise weist die Grundplatte eine größere Dicke als die Stützflansche auf. Damit trägt man der Tatsache Rechnung, dass die Grundplatte die Gewichtskräfte des beweglichen Teils des Regalbediengeräts und gegebenenfalls damit transportierter Lasten aufnehmen muss.

Vorzugsweise ist die Schienenanordnung als Extrusionsprofil, insbesondere als Aluminium Extrusionsprofil ausgebildet. Ein Extrusionsprofil kann mit einer hohen Genauigkeit hergestellt werden. Aluminiumextrusionsprofile haben fertigungstechnologisch gute Toleranzen, insbesondere im Hinblick auf Geradheit und Torsion. Ein aufwändiges Richten derartiger Profile zum Herstellen der Schienenanordnung kann unterbleiben.

Vorzugsweise ist die Schienenanordnung aus mehreren Abschnitten gebildet, die Stoß an Stoß aneinander gesetzt sind. Aufgrund der geringen Toleranz ist es nicht notwendig, die einzelnen Abschnitte an den Stößen miteinander zu verbinden. Es reicht aus, wenn man sie Stoß an Stoß aneinander legt. Dies bedeutet eine erhebliche Kostenersparnis.

In einer bevorzugten Ausführungsform ist das Fahrwerk mit einer Antriebsriemenanordnung verbunden und die Flanschanordnung bildet mit ihrer Oberseite eine Auflagefläche für die Antriebsriemenanordnung. Hierbei ist die Antriebsriemenanordnung stationär und das Fahrwerk weist ein oder mehrere angetriebene Antriebsräder auf, die mit der Antriebsriemenanordnung in Eingriff stehen. Das Fahrwerk zieht sich dann sozusagen selbst an der Antriebsriemenanordnung entlang. Da die Laufbahn von der Oberseite der Flanschanordnung entkoppelt ist, kann man diese Oberseite nunmehr verwenden, um die Abschnitte der Antriebsriehmenanordnung, die aktuell nicht in Eingriff mit dem Antriebsrad oder den Antriebsrädern stehen, abzulegen. Eine Beschädigung der Antriebsriemenanordnung kann damit vermieden werden.

Hierbei wird bevorzugt, dass mindestens ein Ende der Antriebsriemenanordnung mit der Schienenanordnung verbunden ist. Damit ist keine separate Befestigungsstelle, beispielsweise ein Festdübeln auf den Boden notwendig.

Die Erfindung wird im Folgenden anhand eines bevorzugten Ausführungsbeispiels in Verbindung mit der Zeichnung beschrieben. Hierin zeigen:
- Fig. 1: eine Seitenansicht eines Regalbediengeräts,
- Fig. 2: eine perspektivische Darstellung eines Teils des Regalbediengeräts,
- Fig. 3: eine Schienenanordnung mit Teilen des Fahrwerks und
- Fig. 4: eine Vorderansicht des Regalbediengeräts im Ausschnitt.

In allen Figuren sind gleiche Elemente mit den gleichen Bezugszeichen versehen.

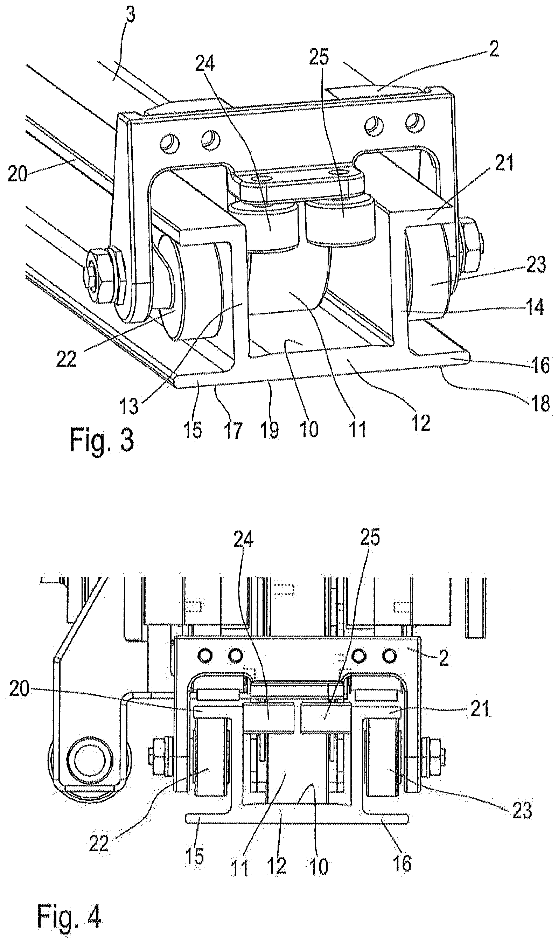

Ein Regalbediengerät 1 weist ein Fahrwerk 2 auf, das entlang einer Schienenanordnung 3 verfahrbar ist. Die Schienenanordnung 3, die im Zusammenhang mit den Figuren 3 und 4 näher beschrieben werden wird, ist in einer Regalgasse verlegt, so dass das Fahrwerk zwei in der Regalgasse verfahren werden kann.

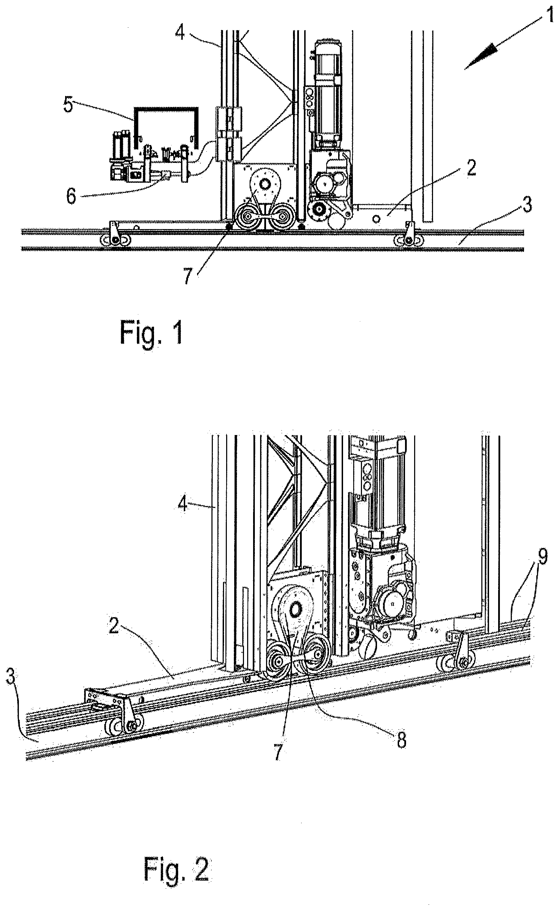

Am Fahrwerk 2 ist ein Mast 4 montiert, an dem ein schematisch dargestellter Hubwagen 5 auf und ab bewegt werden kann. Am Hubwagen 5 sind Lastaufnahmemittel 6 angeordnet, die senkrecht zur Erstreckung der Schienenanordnung 3 und senkrecht zur Erstreckung des Mastes 4 bewegt werden können. Bezogen auf die Darstellung der Figur 1 ist dies eine Bewegung senkrecht zur Zeichenebene.

Die Lastaufnahmemittel 6 können also in drei Raumkoordinaten bewegt werden, um praktisch jeden Bereich eines Regals zu erreichen und dort eine Produkteinheit, beispielsweise ein Paket oder ein Behälter, aufzunehmen oder abzusetzen.

Wie man aus Figur 2 erkennen kann, weist das Fahrwerk einen Antrieb auf, der als sogenannter Ω-Antrieb ausgebildet ist. Der Antrieb weist auf beiden Seiten des Fahrwerks jeweils eine Antriebsscheibe 7 auf, die an ihrem Außenumfang mit einer Verzahnung versehen ist, die mit einer entsprechenden Verzahnung eines Antriebsriemens 8 in Eingriff steht. Dementsprechend sind auch zwei Antriebsriemen 8 beidseits des Fahrwerks 2 vorgesehen. Die beiden Antriebsriemen zusammen bilden eine Antriebsriemenanordnung 9. Die Antriebsriemenanordnung ist an der Schienenanordnung 3 befestigt, vorzugsweise im Bereich ihrer Enden. Wenn sich die Antriebsräder 7 drehen, dann zieht sich das Fahrwerk 2 entlang der Schienenanordnung 3.

Die Schienenanordnung 3 weist eine Laufbahn 10 auf, auf der sich das Fahrwerk 2 mit einer Laufrollenanordnung 11 abstützt. Die Laufbahn 10 ist am Boden einer U-förmigen Ausnehmung der Schienenanordnung 3 angeordnet. Die Laufbahn 10 ist dabei an der Oberseite einer Grundplatte 12 angeordnet, die auf einer Unterlage der Schienenanordnung 3 aufliegt. Diese Unterlage kann beispielsweise ein Fußboden sein. Es ist auch möglich, dass man zwischen dem Fußboden und der Schienenanordnung noch Egalisierelemente einlegt.

Die Schienenanordnung weist beidseits der Grundplatte 12 Seitenwände 13, 14 auf. Die Seitenwände 13, 14 bilden zusammen mit der Grundplatte 12 die oben erwähnte U-förmige Ausnehmung. Ferner weist die Schienenanordnung 3 seitliche Stützflansche 15, 16 auf, deren Unterseite 17, 18 mit der Unterseite 19 der Grundplatte 12 fluchtet. Die Grundplatte 12 setzt sich also seitlich in den Stützflanschen 15, 16 fort, weist aber eine größere Dicke als die Stützflansche 15, 16 auf.

Am oberen Ende, d. h. am von der Grundplatte 12 abgewandten Ende der Seitenwände 13, 14 sind Flansche 20, 21 angeordnet, die sich im Wesentlichen parallel zu den Stützflanschen 15, 16 erstrecken, so dass der Stützflansch 15 mit der Seitenwand 13 und dem Flansch 20 ein U-förmiges Profil bildet und der Stützflansch 16 mit der Seitenwand 14 und dem Flansch 21 ebenfalls ein U-förmiges Profil bildet.

Die Flansche 20, 21 bilden eine Flanschanordnung. Das Fahrwerk 2 weist Unterfangräder 22, 23 auf, die die Flansche 20, 21 und damit die Flanschanordnung untergreifen. An der Unterseite der Flansche 20, 21 ist damit sozusagen eine Rollbahn für die Unterfangräder 22, 23 angeordnet.

Weiterhin weist das Fahrwerk 2 Führungsrollen 24, 25 auf, die von innen, also von der Seite der Laufbahn 10 her, an den Seitenwänden 13, 14 anliegen.

Figur 3 und 4 zeigen eine Anordnung an einem Ende des Fahrwerks 2. Am anderen Ende des Fahrwerks 2 ist eine weitere derartige Anordnung vorgesehen.

Dadurch, dass die Laufbahn 10 unterhalb der Flansche 20, 21 und annähernd bis zum Fußboden abgesenkt ist, kann auch das Fahrwerk 2 relativ niedrig angeordnet werden. Dies hat einen niedrigen Schwerpunkt des Fahrwerks 2 zur Folge, was sich wiederrum günstig auf die Kippneigung auswirkt. Die Führungsrollen 24, 25 können in Schwerkraftrichtung an einem Bereich der Seitenwände 13, 14 angreifen, der oberhalb einer Rotationsachse der Laufrollenanordnung 11 liegt.

Da die Laufbahn 10 an der Oberseite der Grundplatte 12 angeordnet ist, ist die Oberseite der Flansche 20, 21 frei und kann, wie dies in Figur 2 zu erkennen ist, zur Ablage der Antriebsriemen 8 verwendet werden, genauer gesagt des Teils der Antriebsriemen 8, die nicht in Eingriff mit dem Antriebsrad 7 stehen.

Die Schienenanordnung 3 ist als Aluminiumextrusionsprofil ausgebildet. Aluminiumextrusionsprofile haben fertigungstechnologisch gute Toleranzen, insbesondere im Hinblick auf Geradheit und Torsion. Aus diesem Grunde ist es möglich, mehrere Abschnitte der Schienenanordnung 3 dadurch zu einer längeren Schienenanordnung 3 zu verbinden, dass man die einzelnen Abschnitte Stoß an Stoß aneinander setzt. Ein Schweißen oder eine andere Art der Verbindung ist nicht erforderlich. Dadurch ergibt sich bei der Herstellung eine erhebliche Kostenersparnis. Zusätzlich treten keine Korrosionprobleme in feucht-warmen Lagern auf.

Alternativ zur Herstellung der Schienenanordnung 3 durch Extrudieren von Aluminium kann man auch andere Herstellungsverfahren verwenden. Beispielsweise kann man ein Profil aus gewalztem, gezogenem, gerolltem oder auf andere Weise umgeformten Stahl oder aus einem anderen Metall verwenden.

## Patentansprüche

1. Regalbediengerät (1) mit einer Schienenanordnung (3) und einem Fahrwerk (2), das mit einer Laufrollenanordnung (11) auf einer Laufbahn (10) der Schienenanordnung (3) abgestützt ist und mit einer Anordnung von Unterfangrädern (22, 23) eine Flanschanordnung der Schienenanordnung (3) untergreift, wobei die Laufbahn (10) in Schwerkraftrichtung unterhalb der Flanschanordnung (20, 21) angeordnet ist, die Laufbahn (10) am Boden einer U-förmigen Ausnehmung der Schienenanordnung (3) angeordnet ist, der Boden die Oberseite einer Grundplatte (12) bildet, die auf einer Unterlage der Schienenanordnung aufliegt und das Fahrwerk Führungsrollen (24, 25) aufweist, die an Seitenwänden (13, 14) der U-förmigen Ausnehmung anliegen, **dadurch gekennzeichnet, dass** die Schienenanordnung (3) seitliche Stützflansche (15, 16) aufweist, deren Unterseite (17, 18) mit der Unterseite (19) der Grundplatte (12) fluchtet, wobei die Flanschanordnung Flansche (20, 21) aufweist, die am von der Grundplatte (12) abgewandten Ende der Seitenwände (13, 14) angeordnet sind und sich im Wesentlichen parallel zu den Stützflanschen (15, 16) erstrecken, wobei ein Stützflansch (15) mit der einen Seitenwand (13) und dem einen Flansch (20) ein U-förmiges Profil bildet und der andere Stützflansch (16) mit der anderen Seitenwand (14) und dem anderen Flansch (21) ebenfalls ein U-förmiges Profil bildet.

2. Regalbediengerät nach Anspruch 1, **dadurch gekennzeichnet, dass** die Grundplatte (12) eine größere Dicke als die Stützflansche (15, 16) aufweist.

3. Regalbediengerät nach Anspruch 1 oder 2, **dadurch gekennzeichnet, dass** die Schienenanordnung (3) als Extrusionsprofil, insbesondere als Aluminiumextrusionsprofil, ausgebildet ist.

4. Regalbediengerät nach einem der Ansprüche 1 bis 3, **dadurch gekennzeichnet, dass** die Schienenanordnung (3) aus mehreren Abschnitten gebildet ist, die Stoß an Stoß aneinander gesetzt sind.

5. Regalbediengerät nach einem der Ansprüche 1 bis 4, **dadurch gekennzeichnet, dass** das Fahrwerk (2) mit einer Antriebsriemenanordnung (9) verbunden ist und die Flanschanordnung (20, 21) mit ihrer Oberseite eine Auflagefläche für die Antriebsriemenanordnung (9) bildet.

6. Regalbediengerät nach Anspruch 5, **dadurch gekennzeichnet, dass** mindestens ein Ende der Antriebsriemenanordnung (9) mit der Schienenanordnung (3) verbunden ist.

## Claims

1. Shelf serving device (1) having a rail arrangement (3) and a running gear (2) which is supported by a track roller arrangement (11) on a track (10) of the rail arrangement (3) and engages under a flange arrangement of the rail arrangement (3) by means of an arrangement of underrun wheels (22, 23), the track (10) being arranged below the flange arrangement (20, 21) in the direction of gravity, the track (10) being arranged at the bottom of a U-shaped recess of the rail arrangement (3), the bottom forming the upper side of a base plate (12) which rests on a support of the rail arrangement, and the running gear having guide rollers (24, 25) which are mounted on side walls (13, 14) of the U-shaped recess, **characterized in that** the rail arrangement (3) has lateral support flanges (15, 16), the underside (17, 18) of which is aligned with the underside (19) of the base plate (12), the flange arrangement having flanges (20, 21) which are arranged at the end of the side walls (13, 14) remote from the base plate (12) and extending substantially parallel to the support flanges (15, 16), one support flange (15) forming a U-shaped profile with the one side wall (13) and the one flange (20) and the other support flange (16) forming a U-shaped profile with the other side wall (14) and the other flange (21).

2. Shelf serving device according to claim 1, **characterized in that** the base plate (12) has a greater thickness than the support flanges (15, 16).

3. Shelf serving device according to claim 1 or 2, **characterized in that** the rail arrangement (3) is formed as an extrusion profile, in particular as an aluminium extrusion profile.

4. Shelf serving device according to any of claims 1 to 3, **characterized in that** the rail arrangement (3) is formed from a plurality of sections which are placed abutting one another.

5. Shelf serving device according to any of claims 1 to 4, **characterized in that** the running gear (2) is connected to a drive belt arrangement (9) and the flange arrangement (20, 21) forms with its upper side a bearing surface for the drive belt arrangement (9).

6. Shelf serving device according to claim 5, **characterized in that** at least one end of the drive belt arrangement (9) is connected to the rail arrangement (3).

## Revendications

1. Appareil de commande de rayonnage (1) avec un système de rails (3) et un châssis mobile (2), qui est appuyé avec un système de galets de roulement (11) sur une piste de roulement (10) du système de rails (3) et un agencement de flasques du système de rails (3) vient en prise par en dessous avec un système de roues de soutien (22, 23), sachant que la piste de roulement (10) est disposée dans le sens de la force de gravité en dessous de l'agencement de flasques (20, 21), la piste de roulement (10) est disposée sur le fond d'un évidement en forme de U du système de rails (3), le fond forme la face supérieure d'une plaque de base (12), qui repose sur un support inférieur du système de rails et le châssis mobile comporte des galets de guidage (24,25), qui adhèrent aux parois latérales (13, 14) de l'évidement en forme de U, **caractérisé en ce que** le système de rails (3) comporte des flasques de support latéraux (15, 16), dont la face inférieure (17, 18) est alignée avec la face inférieure (19) de la plaque de base (12), sachant que l'agencement de flasques comporte des flasques (20, 21), qui sont disposés sur l'extrémité opposée à la plaque de base (12) des parois latérales (13, 14) et s'étendent pour l'essentiel parallèlement aux flasques de support (15, 16), sachant qu'un flasque de support (15) forme avec une paroi latérale (13) et un flasque (20) un profilé en forme de U et l'autre flasque de support (16) forme avec l'autre paroi latérale (14) et l'autre flasque (21) également un profilé en forme de U.

2. Appareil de commande de rayonnage selon la revendication 1, **caractérisé en ce que** la plaque de base (12) comporte une épaisseur supérieure au flasque de support (15, 16).

3. Appareil de commande de rayonnage selon la revendication 1 ou 2, **caractérisé en ce que** le système de rails (3) est constitué sous la forme d'un profilé extrudé, en particulier sous la forme d'un profilé extrudé en aluminium.

4. Appareil de commande de rayonnage selon l'une quelconque des revendications 1 à 3, **caractérisé en ce que** le système de rails (3) est formé de plusieurs sections, qui sont placées bout à bout l'une à côté de l'autre.

5. Appareil de commande de rayonnage selon l'une quelconque des revendications 1 à 4, **caractérisé en ce que** le châssis mobile (2) est relié à un système à courroies d'entraînement (9) et l'agencement de flasques (20, 21) forme avec sa face supérieure une surface d'appui pour le système à courroies d'entraînement (9).

6. Appareil de commande de rayonnage selon la revendication 5, **caractérisé en ce qu'au** moins une extrémité du système à courroies d'entraînement (9) est reliée au système de rails (3).
